# EUROPEAN PATENT APPLICATION

(11) **EP 3 709 649 A1**
(43) Date of publication of application: **16.09.2020**
(21) Application number: 20162355.0
(22) Date of filing: 11.03.2020
(51) Int. Cl.: H04N 19/176, H04N 19/52, H04N 19/573

(54) **DECODING METHOD, DECODING APPARATUS, AND ENCODING METHOD**

(30) Priority: 11.03.2019 JP 2019043469
(71) Applicant: Renesas Electronics Corporation, Tokyo 135-0061 (JP)
(72) Inventor: HASHIMOTO, Ryoji, Tokyo, 135-0061 (JP); MOCHIZUKI, Seiji, Tokyo, 135-0061 (JP)
(74) Representative: Betten & Resch

(57) **Abstract**

The decoding method is a decoding method for decoding a bitstream, in which a difference between a reference index and a prediction value of a motion vector is used for each block obtained by dividing each frame of a moving picture in which a plurality of frames are consecutive, in which a plurality of groups having a predetermined number of blocks are defined in each frame and a limitation is applied for each group to a range of reference index and differences of blocks other than the first block in the group, and the decoding method includes a step for determining whether the block to be decoded is the first block of the group, a step for decoding using the reference index and difference if the block is not the first block, and a step for decoding using the limited reference index and differences if the block is not the first block.

## Description

### CROSS-REFERENCE TO RELATED APPLICATIONS

The disclosure of Japanese Patent Application No.2019-043469 filed on March 11, 2019 including the specification, drawings and abstract is incorporated herein by reference in its entirety.

### BACKGROUND

The present invention relates to a decoding method, a decoding device, and an encoding method, for example, a decoding method and a decoding device for decoding an encoded moving image, and an encoding method for encoding a moving image.

In encoding an image, the image is divided into rectangles called blocks, and a process called motion compensation is performed in units of the rectangles to predict the image and perform compression. In the motion compensation, pixel values are copied from the specified position of the image encoded previously by using parameters of a reference index indicating which frame is to be used and a motion vector indicating a position in the frame. At the time of copying, an area larger than the actual blocks is read, and a filtering process is performed on the area. For example, depending on the standard, a region of 23×23 for 16×16 and a region of 15×15 for 8×8 may be required at the maximum.

In motion compensation, there is also a method of performing motion compensation not only from a single image but also from a plurality of images. In the encoding of the motion vector, in order to realize a higher compression ratio, the motion vector of the current block is predicted from the motion vector of the block in the vicinity of the current block, and only the difference between the prediction value and the current motion vector is encoded.

There is disclosed technique listed below.

[Patent Document 1] Japanese Unexamined Patent Application Publication 2015-027095

### SUMMARY

In the motion compensation, there is a problem that the worst case of the amount of data read from the external memory becomes enormous when the block division becomes finer. Since this reads out an area larger than the actual size of the block, more data is required as the number of blocks increases. For example, in one standard, in order to process 16×16 regions, if there is no divide, 7 is added in both the vertical and horizontal directions, and data of 23×23=529 is required. On the other hand, in the case of dividing into 8×8, 7 is added in both the vertical and horizontal directions, and 4×15×15=900 is obtained. The division of the block may be further finely divided into 8×4, 4×8, and 4×4.

When the value of the motion vector is greatly different from that of a neighboring block or the frame to be referred to is different, there is a possibility that a penalty is occurred at the time of reading the external memory. This is because the external memory (a large-capacity memory typified by DDR) is standardized so as to be efficient when accessing consecutive addresses, and when continually accessing at distant (greatly different addresses on the memory) locations, a penalty called a page miss may occur, and the access efficiency may deteriorate.

Depending on the standard, there is a constraint on the value of the difference between the motion vectors that can be included in the data, but the difference has a large value of ±65536, and even an image such as 16K having a width exceeding 10,000 pixels can be referred to from end to end, which is substantially the same situation without any constraint. Therefore, there is a problem that the worst case of the amount of data to be read from the external memory becomes enormous when the block division becomes finer.

Other objects and novel features will become apparent from the description of this specification and the accompanying drawings.

According to one embodiment, the decoding method is a decoding method for decoding a bitstream code with a moving picture using a difference between a reference index indicating a frame to be referred to and a predicted value of a motion vector predicted in the frame for each block obtained by dividing each frame of a plurality of frames, wherein a group having a predetermined number of the blocks is defined in each of the frames, a range of the reference index and the difference of the blocks other than the first block in the group is restricted for each group, and the block to be decoded is a first block determining step for determining whether the block to be decoded is the first block of the group, and when the block to be decoded is the first block to be decoded is the first block to be decoded using the reference index and the difference. If the target block is not the first block, a second or subsequent block decoding step of decoding using the limited reference index and the difference is provided.

According to the above-mentioned embodiment, a decoding method, a decoding device, and a coding method wherein of making memory accesses efficiency can be provided.

### BRIEF DESCRIPTION OF THE DRAWINGS

FIG. 1 is a diagram illustrating a comparative example according to encoding method and a decoding method.
FIG. 2 is a diagram illustrating an encoding method and a decoding method according to embodiment 1.
FIG. 3 is a flow chart illustrating basic concepts of an encoding method and a decoding method according to embodiment 1.
FIG. 4 is a diagram illustrating a configuration of an encoding device according to embodiment 1.
FIG. 5 is a diagram illustrating a configuration of a decoding device according to embodiment 1.
FIG. 6 is a syntax exemplifying a decoding method according to embodiment 2.
FIG. 7 is a syntax exemplifying a decoding method according to embodiment 2.
FIG. 8 is a syntax exemplifying a decoding method according to embodiment 2.
FIG. 9 is a diagram illustrating merging in a decoding process according to embodiment 2.
FIG. 10 is a flow chart illustrating a decoding process according to embodiment 2.
FIG. 11 is a syntax exemplifying a decoding method according to embodiment 3.
FIG. 12 is a syntax exemplifying a decoding method according to embodiment 3.
FIG. 13 is a flow chart illustrating a decoding process according to embodiment 3.
FIG. 14 is a flow chart illustrating another decoding process according to embodiment 3.

### DETAILED DESCRIPTION

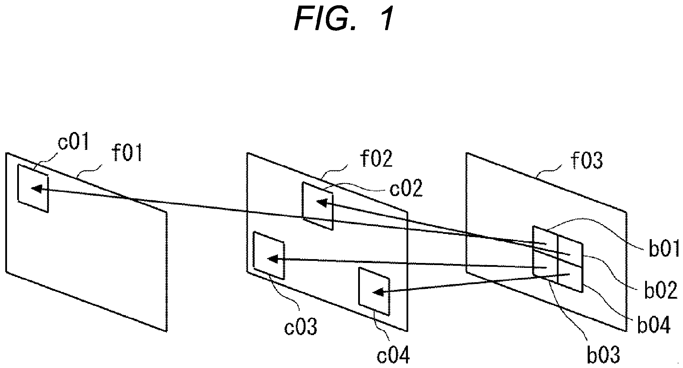

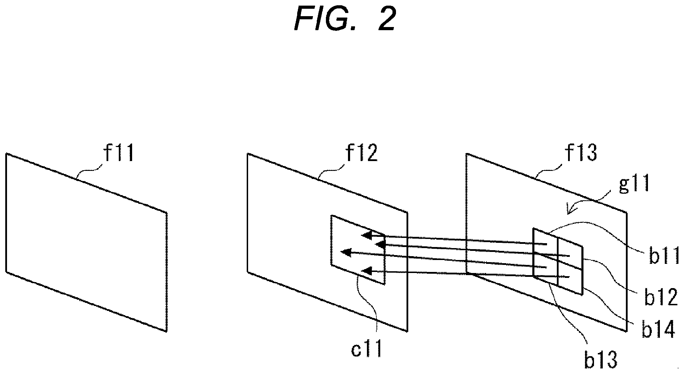

FIG. 1 is a diagram illustrating a comparative example according to encoding method and a decoding method. FIG. 2 is a diagram illustrating an encoding method and a decoding method according to embodiment 1.

As shown in FIGs. 1 and 2, the moving image includes a plurality of frames f01 to f03 and frames f11 to f13 in succession. In encoding a moving image, each frame is divided into rectangles called blocks b01 to b04 and b11 to b14. Then, a process called motion compensation is performed on a block-by-block basis. Thus, the moving image is predicted and compressed. On the other hand, in decoding, the encoded bitstream is converted into a moving image.

In the motion compensation, a process of copying a pixel value from a specified position of a moving image encoded previously is performed using parameters including a reference index and a motion vector. Here, the reference index indicates a frame to be referred to which frame is to be used among a plurality of consecutive frames. The motion vector indicates a position in the frame. For example, in the case of encoding and decoding, a motion vector is predicted in advance in a frame, and a difference from the predicted vector is encoded and decoded.

As shown in FIG. 1, the encoding method according to the comparative example, for example, performs a motion compensating process for blocks b01 to b04 using a plurality of frames f01 and f02. In the comparative example, the block b01 refers to the value c01 of the frame f01 different from the blocks b02 to b04. In the blocks b02 to b04 referring to the same frame f02, the values c02 to c04 to be referred to are greatly different from each other. As in the comparative example, when the frame to be referred to is different, and when the value of the motion vector is largely different from that of the vicinity block, the maximum value of the amount of data to be read from the external memory becomes enormous when the division of the block becomes finer.

As shown in FIG. 2, the encoding method of the present embodiment defines a group g11 including a plurality of small blocks b11 to b14. Here, the small blocks b11 to b14 are blocks in which the number of pixels included in the block is equal to or less than a certain number, or blocks in which the number of divisions in the frame is equal to or more than a certain number. For example, a small block is a block in which the number of pixels included in the block is 64 or less. In addition, the total of the vertical and horizontal pixels is 16 or less. In the figure, the group g11 includes four blocks b11 to b14, but the number of blocks included in the group g11 is not limited to this.

In the present embodiment, for example, the following constraints are added to the blocks in the group. (i) The frames referenced by the block are made the same in the group. (ii) Limit the range of motion vectors (change the encoding method of the motion vector to one that yields only a limited range of values, make the difference between the motion vectors in the same group within a certain range). (iii) The predicted values of the motion vectors are made the same in the group (e.g., the predicted value of the motion vector obtained in the first block in the block is made the predicted value in the group, or the motion vector obtained in the first block is used as the predicted value of the remaining motion vectors in the same group) .

As a result, as shown in FIG. 2, the collective area c11 is accessed without referring to the discrete areas. For this reason, for example, the memory bandwidth in the external memory can be reduced, and at the same time, the address for accessing the external memory can be set to a close value. Therefore, the access efficiency can be improved.

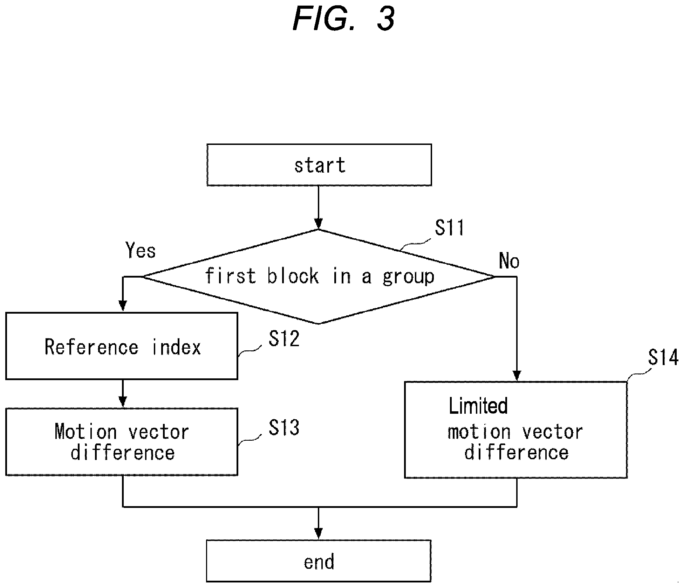

FIG. 3 is a flow chart illustrating basic concepts of an encoding method and a decoding method according to embodiment 1. As an example, a decoding case will be described. In the present embodiment, a plurality of groups having a predetermined number of blocks are defined in each frame. Then, as shown in step S11 of FIG. 3, for example, it is determined whether or not the block to be decoded is the first block in a group in the bitstream. If the target block is the first block of the group, there is normally a difference between the frame to be referenced and the motion vector. Then, as shown in step S12, the reference index is decoded, and as shown in step S13, the difference between the motion vectors is decoded.

On the other hand, in step S11, when the target block is not the first block in the group, that is, in the case of the second and subsequent blocks in the group, there is only a motion vector in which the range of the difference between the motion vectors is limited. Then, as shown in step S14, the difference between the limited motion vectors is decoded. Encoding and decoding are performed using such a basic concept.

By varying the size of the groups, it is possible to vary the size of the blocks to be limited. In some cases, there may be other blocks larger than the size of the group.

As described above, in the present embodiment, taking the encoding method as an example, for each block obtained by dividing each frame of a moving image in which a plurality of frames are consecutive, the moving image is encoded into the bitstream by using the difference between the reference index and the predicted value of the motion vector. At this time, first, a plurality of groups having a predetermined number of blocks are defined in each frame. Then, it is determined whether or not the block to be encoded is the first block of the group. When the block to be encoded is the first block, encoding is performed using the reference index and the difference. If the target block is not the first block, the reference index and the range of the difference are encoded by adding a limitation for each group.

Taking the decoding method as an example, the decoding method is a decoding method for decoding a bitstream in which a moving image is encoded for each block by the above-described encoding method. At the target of decoding, first, it is determined whether or not the block to be decoded is the first block of the group. Then, if the target block is the first block, it is decoded using the reference index and the difference. If the target block is not the first block, it is decoded using the limited reference index and the difference.

In the present embodiment, groups are defined as described above. For example, constraints are provided so that the frames referred to in the blocks in the group are the same and the values of the motion vectors are close to each other. This prevents blocks within a group from referencing discrete locations.

For example, as a limitation to be added to the second and subsequent blocks, the reference index is set to the same reference index as that of the first block. The prediction value may be the same prediction value as the first block, or the prediction value may be a motion vector of the first block. Thus, for example, the memory bandwidth of the external memory can be reduced, and the efficiency of memory access can be improved. This is for accessing a group of regions without referring to the discrete regions.

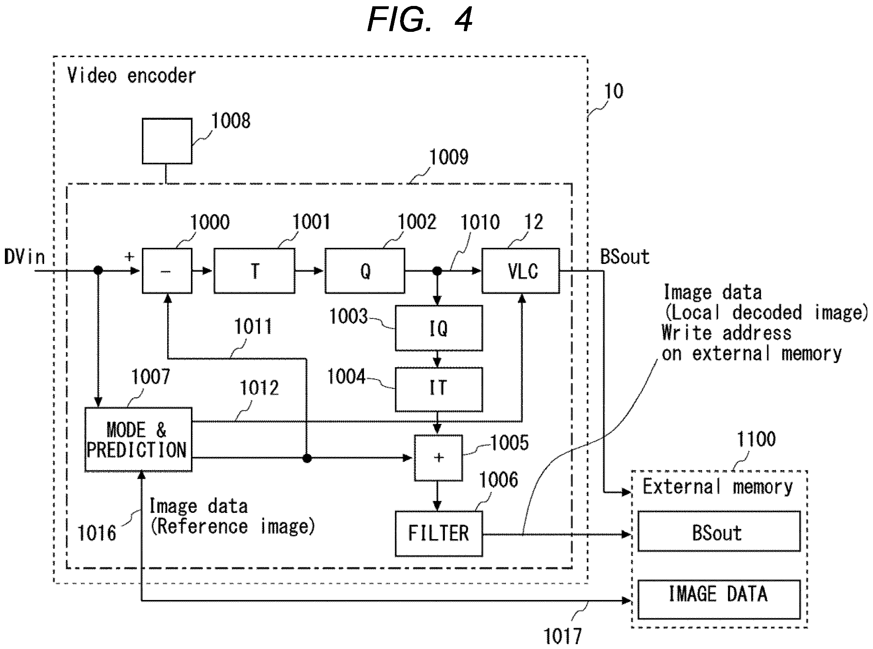

Next, an encoding device for performing encoding and a decoding device for performing decoding according to the present embodiment will be described. FIG. 4 is a diagram illustrating a configuration of an encoding device according to embodiment 1. As shown in FIG. 4, the encoding device 10 includes an encoding unit 1009 and a control unit 1008. The encoding unit 1009 encodes a moving image into a bitstream by using a difference between a reference index and a prediction value for each block obtained by dividing each frame of a moving image in which a plurality of frames are consecutive. The encoding unit 1009 includes a difference circuit (-) 1000, an orthogonal transform circuit (T) 1001, a quantization circuit (Q) 1002, an inverse quantization circuit (IQ) 1003, an inverse orthogonal transform circuit (IT) 1004, an addition circuit (+) 1005, a filtering circuit 1006, a prediction-mode determination circuit (MODE & PREDICTION) 1007, and a stream encoding unit (VLC) 12.

The input picture signals DVin are divided into blocks and input. The difference circuit (-) 1000 obtains a difference between the predicted signal 1011 and the inputted signal DVin for each pixel. Thereafter, the signal is converted into a signal 1010 by an orthogonal transform circuit (T) 1001 and a quantization circuit (Q) 1002. After the conversion, the data stream is encoded by the stream encoding unit 12 and outputted as a data stream BSout. The data stream is also referred to as a bitstream. At the same time, the signal 1010 is inversely transformed into a difference signal by an inverse quantization circuit (IQ) 1003 and an inverse orthogonal transformation circuit (IT) 1004. Thereafter, the addition circuit (+) 1005 adds the predicted signal 1011 and the predicted signal 1011 for each pixel, and after the filtering process is performed by the filtering circuit 1006, the same image signal (local decoded image) as that obtained by the decoding device is obtained. The local decoded image is written in the External memory 1100, and the local decoded image is used in a subsequent treatment of generating the predicted signal 1011.

The prediction signal 1011 is generated in the prediction mode determination circuit 1007 as follows. The input image signal (encoded block) DVin is input to the prediction-mode determination circuit 1007. The prediction mode determination circuit 1007 prepares a plurality of candidate vectors for obtaining candidates for a prediction signal of a corresponding encoded block. Then, the prediction mode determination circuit 1007 accesses the encoded region of the External memory 1100 with the address signal 1017 to acquire the pixel signal 1016, and generates a prediction signal based on the specified candidate vector from the acquired pixel signal. The prediction mode determination circuit 1007 calculates a prediction error by taking a difference between the input signal DVin (encoded block signal) and the prediction block signal for each pixel. After the prediction errors of all the candidate vectors are calculated, the vector 1012 having the smallest prediction error is used for vector prediction, and the prediction signal 1011 corresponding to the vector 1012 used for vector prediction is output. The vector 1012 used for vector prediction is a part of the data stream BSout in the stream encoder 12.

Although not particularly limited, the prediction mode determination circuit 1007 uses a prediction method using a motion vector (motion vector) in the case of inter-frame prediction, and uses a prediction method from surrounding pixels in the case of intra-frame prediction. In addition, the predictive mode determination circuit 1007 generates information required to configure the data stream BSout, and supplies the generated information to the stream encoding unit 12.

When encoding a moving image into a bitstream, the control unit 1008 defines a plurality of groups having a predetermined number of blocks in each frame. Then, the control unit 1008 determines whether the target block to be encoded is the first block of the group. When the target block is the first block, the control unit 1008 causes the encoding unit 1009 to encode the target block using the reference index and the difference.

On the other hand, when the target block is not the first block, the encoding unit 1009 is caused to encode the reference index and the difference range by adding a limitation for each group. Specifically, the reference index is the same reference index as the first block. The prediction value may be the same prediction value as the first block, or the prediction value may be a motion vector of the first block. If it is not the first block, the value of the motion vector is determined so that the difference between the value of the motion vector and the value of the motion vector of the first block falls within a certain range. In this manner, the encoding device 10 encodes the moving image.

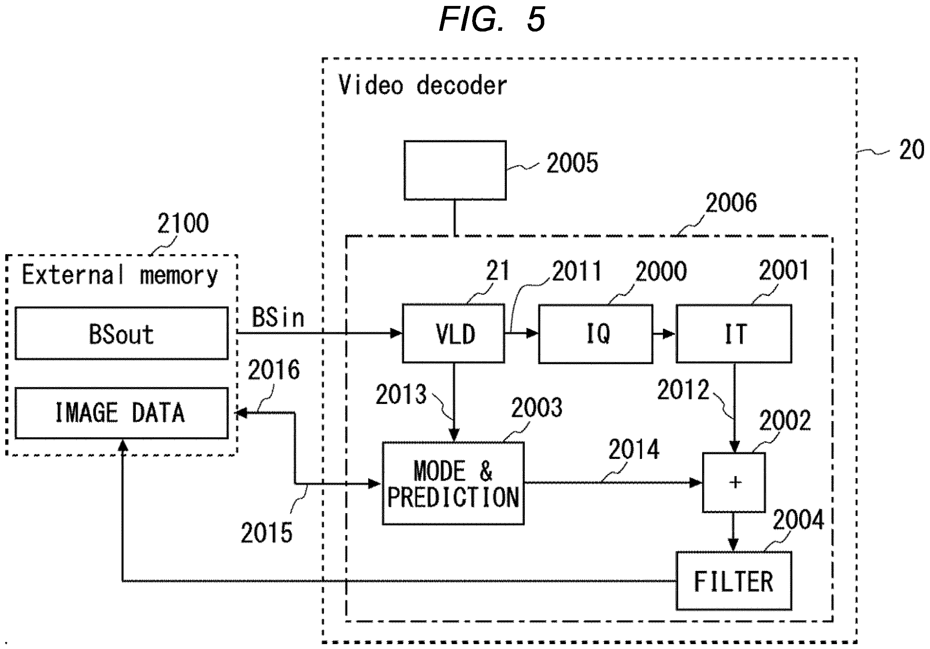

FIG. 5 is a diagram illustrating a configuration of a decoding device according to embodiment 1. As shown in FIG. 5, the decoding device 20 includes a decoding unit 2006 and a determining unit 2005. The decoding device 20 decodes the bitstream in which the moving image is encoded by using the difference between the reference index and the predicted value for each of the blocks obtained by dividing each frame of the moving image in which a plurality of frames are consecutive. In the present embodiment, the decoding device 20 defines a plurality of groups each having a predetermined number of blocks in each frame. Limits for each group are applied to the reference index and the difference range of the blocks other than the first block in the group. The decoding device 20 decodes the bitstream in which the moving image is encoded for each of such blocks.

The decoding unit 2006 decodes a moving image from the bitstream. The decoding unit 2006 includes an inverse quantization circuit (IQ) 2000, an inverse orthogonal transform circuit (IT) 2001, an image reproduction circuit (+) 2002, a predictive signal generation circuit (P) 2003, a filtering circuit 2004, and a stream decoding unit (VLD) 21.

For example, the data stream BSin inputted from the External memory 2100 includes a vector used for vector prediction for each of blocks constituting an image, and information of a difference signal with respect to the prediction signal. The stream decoder 21 decodes the data stream BSin, and extracts vectors 2013 and difference data 2011 to be used for vector prediction. The difference data 2011 is converted into a difference signal 2012 by an inverse quantization circuit (IQ) 2000 and an inverse orthogonal transform circuit (IT) 2001. In parallel with this, the prediction signal generation circuit (P) 2003 generates a designated address 2016 of the decoded region of the external memory (External memory) 2100 based on the vector 2013 used for prediction, acquires a pixel signal 2015 of the corresponding address, and generates a pixel signal 2014 of the prediction block. The pixel signal 2014 of the generated predicted block is added to the difference signal 2012 in the image reproduction circuit (+) 2002, and the image of the corresponding block is reproduced via the filtering circuit 2004. The filtering circuit 2004 reproduces a block by performing a filtering process on an area having more pixels than the target block. The filtering process is, for example, a process of reducing an error. The reproduced image is written in the External memory 2100, and is used as a candidate for occurring a predicted image at the time of reproducing an image of a subsequent block. After the decoding process for one image is completed, the signal of the occurred image is output as an output signal and displayed on a display device such as a TV.

Although not particularly limited, in the case of inter frame prediction, the prediction signal generation circuit 2003 uses the vector 2013 used for vector prediction as a motion vector, and in the case of intra frame prediction, the prediction signal generating circuit 2003 predicts pixels from vicinity regions. In addition, information constituting the data stream BSin is decoded by the stream decoding unit 21, and the decoded information is used in processes such as the predictive signal generation unit 2003.

The determination unit 2005 determines whether the block to be decoded is the first block of the group. When the target block is the first block, the determination unit 2005 causes the decoding unit 2006 to decode the block using the reference index and the difference.

On the other hand, when the block to be decoded is not the first block, the determination unit 2005 causes the decoding unit 2006 to decode the block using the limited reference index and the difference. Specifically, when the target block is not the first block, the determination unit 2005 causes the decoding unit 2006 to decode the target block using the same reference index as the first block. When the target block is not the first block, the determination unit 2005 may cause the decoding unit 2006 to decode the block using the same prediction value as the first block as the prediction value, or may cause the decoding unit 2006 to decode the block using the motion vector of the first block as the prediction value.

Next, effects of the present embodiment will be described. In the present embodiment, a group including a plurality of blocks is defined, and the difference between the reference index and the prediction value in the group is limited. Therefore, the blocks in the group do not refer to different locations, and memory access can be made more efficient.

By setting the reference index and prediction value of the second and subsequent blocks to the same reference index and prediction value as those of the first block in the group, the addresses of the external memories can be brought close to each other, so that memory access can be made efficient.

The blocks in the group are small blocks in which the number of pixels is equal to or less than a certain number or the number of divisions is equal to or more than a certain number. In the case of such a block, particularly, the worst case of the amount of data read from the external memory becomes enormous, but in the present embodiment, it is possible to suppress an increase in the amount of data by sharing the reference index and the prediction value within the group.

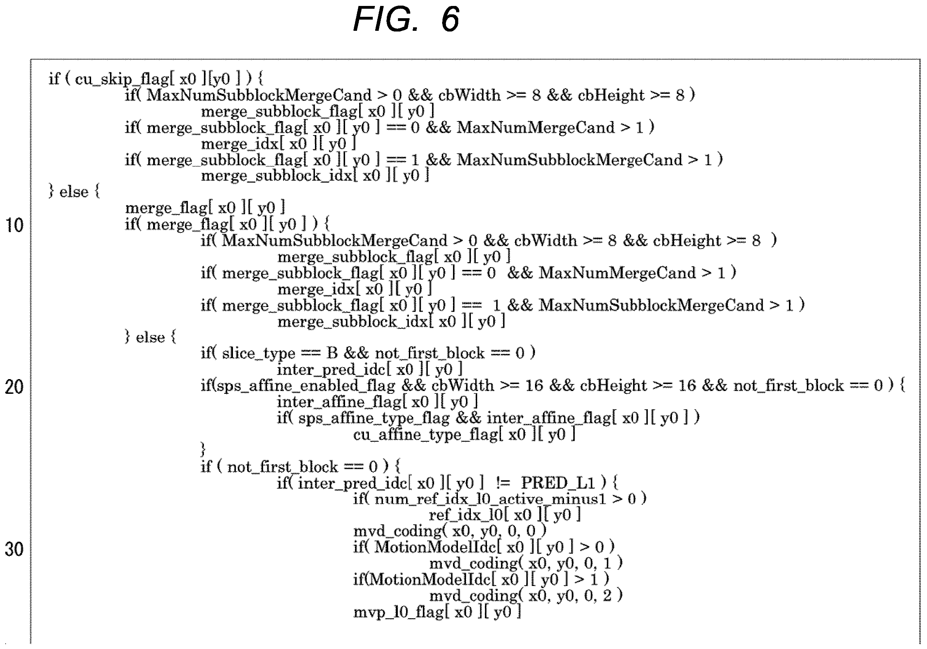

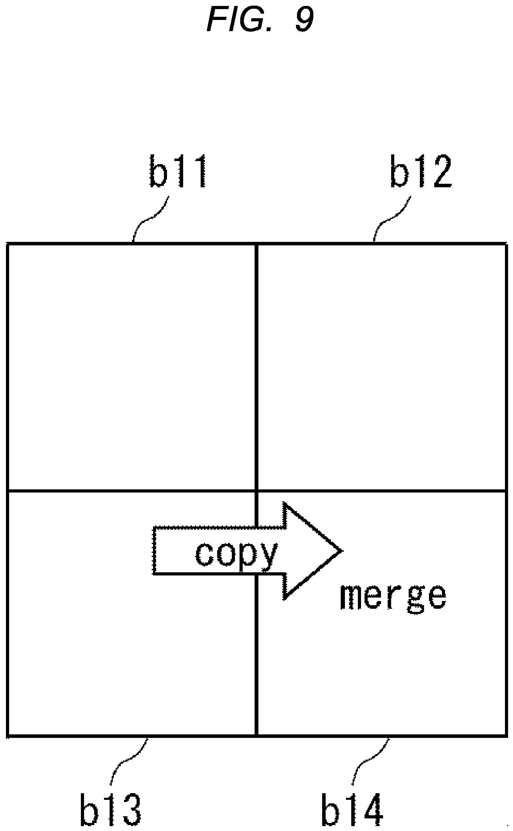

(Embodiment 2) Next, the second embodiment will be described. The present embodiment is an example in which the above described embodiment 1 is applied to, for example, the decoding process of the moving image encoding standard WC. FIGs. 6 to 8 are a syntax exemplifying a decoding method according to embodiment 2. The number of lines in the page is shown outside the frame. FIG. 9 is a diagram illustrating merging in a decoding process according to embodiment 2.

As shown in the first line of FIG. 6, first, a branch is occurred by "cu_skip_flag". Skipping is one of the prediction methods. When "cu_skip_flag" is 1, the mode is considered to be a mode ("merge") in which all of the prediction direction ("inter_pred_idc"), the reference index, and the motion vector are copied from the surrounding blocks. Only the data on the "merge" (from which surrounding blocks to copy) is decoded. The prediction direction indicates a direction in which there is a frame used for prediction with respect to the time axis. The prediction direction is referred to as the forward direction when it is in front, the backward direction when it is in back, and the both forward and backward directions when it is in front and back.

When "cu_skip_flag" is 0, whether to decode the prediction direction, the reference index, the motion vector, and the like is further branched by "merge_flag" indicating whether the prediction method is "merge". Lines 2 to 7 and lines 11 to 16 of FIG. 6 show where the merge is performed.

For "merge", as shown in FIG. 9, the prediction directions, referenced index, and motion vectors are not decoded from the bitstream, but are copied from the surroundings. On the other hand, if it is not "merge", the difference values of the prediction directions, the reference frame, and the motion vector are decoded from the bitstream.

Here, in the present embodiment, as shown in lines 18 and 25, a variable "not_first_block" indicating whether or not the block is the first block in the group is prepared. When "not_first_block" is 1, only the difference of the motion vector is decoded without decoding the reference index or the like. The decoding of the motion vector at this time is based on the assumption that the range of possible values is small.

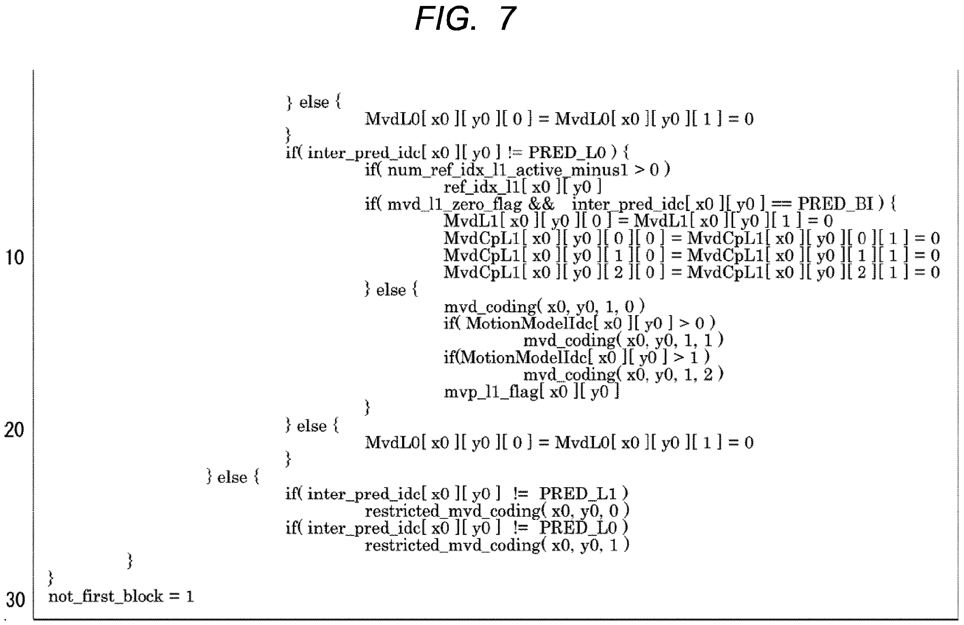

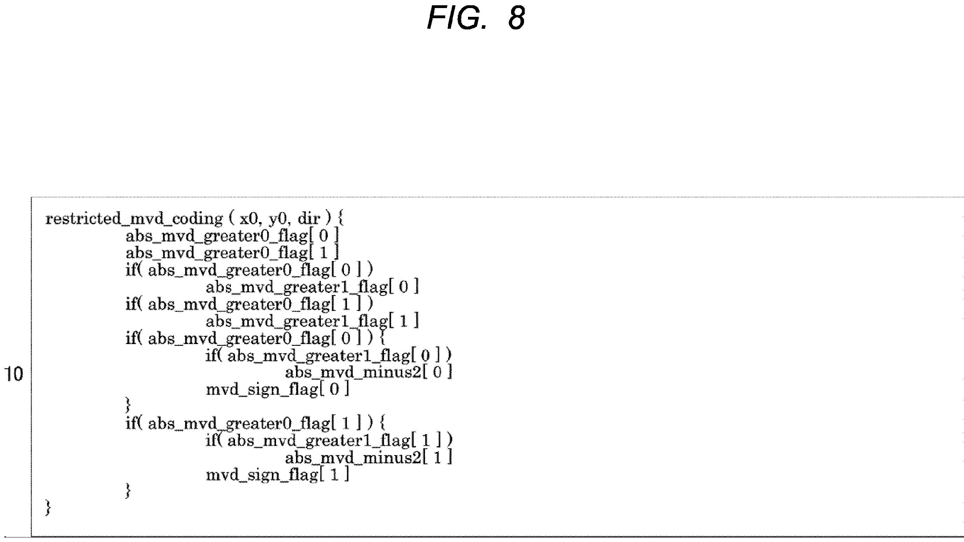

That is, it is guaranteed that "abs_mvd_minus2" in the 10th line and the 15th line of FIG. 8 is decrypted as a constant value or less in "restricted_mvd_coding" which is defined as "restricted mvd_coding" in the 25th line and the 27th line of FIG. 7 and advances to the first line of FIG. 8. Since the motion vector is two-dimensional, the two axes in the horizontal direction and the vertical direction are denoted by 0 and 1.

The prediction direction and reference index not decoded from the bitstream are the same as the first block in the group. As a result, the prediction direction and the reference index are the same within the group, and there is no large motion vector difference.

The "slice_type" in the 18th line of FIG. 6 indicates that a frame is referred to, and B indicates that up to two frames can be used. Instead of B, in the case of P, one sheet is used. "inter_pred_idc" in the 19th line of FIG. 6 indicates the direction of prediction whether one sheet or two sheets are used.

The variable "not_first_block" is reset to 0 at the time of group switching. When even one block is decoded, the variable becomes 1 as in line 30 of FIG. 7.

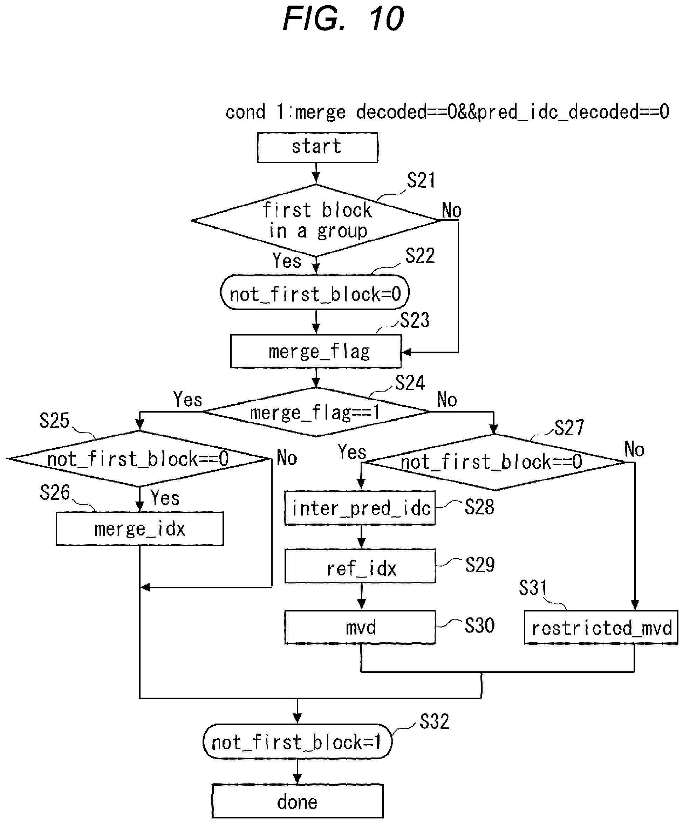

FIG. 10 is a flow chart illustrating a decoding process according to embodiment 2. FIG. 10 is a flowchart showing the basic concept of the decoding method in the above program.

As shown in step S21 of FIG. 10, it is determined whether the block is the first block of the group. In the case of the first block, "not_first_block" is set to 0 as shown in step S22. Then, as shown in step S23, "merge_flag" is read in. On the other hand, if the block is not the first block in step S21, the process advances to step S23 to read "merge_flag".

Next, as shown in step S24, it is determined whether or not "merge_flag" is 1. That is, it is determined whether or not to merge. When "merge_flag" is 1, it is determined that "not_first_block" is 0 as shown in step S25. In step S25, when "not_first_block" is 0, that is, in the case of the first block, merging is performed as shown in step S26. When "not_first_block" is not 0, that is, in the case of the second and subsequent blocks, the process proceeds to step S32.

On the other hand, when "merge_flag" is not 1 in step S24, it is determined that "not_first_block" is 0 as shown in step S27. When "not_first_block" is 0, it is the first block in the group. Therefore, as shown in steps S28, S29, and S30, decoding is performed using the difference between the prediction direction, the reference index, and the motion vector. In the present embodiment, the prediction direction is also enencoded in the bitstream. Therefore, decoding is performed using the prediction direction in addition to the difference between the reference index and the prediction value of the motion vector.

In step S27, when "not_first_block" is not 0, it is the second and subsequent blocks in the group. Therefore, as shown in step S31, decoding is performed using the difference from the prediction value of the limited motion vector.

Next, as shown in step S32, "not_first_block" is set to 1. Repeat from "Start" to "done" for the blocks. In this way, the bitstream can be decoded.

In the present embodiment, before determining whether the block to be decoded is the first block of the group, it is determined whether the block to be decoded is the target of merging. In the case of merging, the prediction direction, the reference index, and the motion vector are not decoded from the bitstream but copied from the targets. If it is not the subject of merging, it is first determined whether the first blocks of the groups are based on the basic concepts of the embodiment 1. Then, the processing proceeds between the first block and the second and subsequent blocks in different cases.

According to the present embodiment, the basic concepts of the embodiment 1 can be applied to the decoding process of the moving image coding standard WC. Therefore, even in the decoding process of the moving image coding standard WC, it is possible to suppress an increase in the amount of data. Memory access can be made more efficient. Other configurations and advantages are included in the embodiment 1 description.

Next, the third embodiment will be described. In the above embodiment 2, if the first block in the group is "merge" or "skip" and the subsequent block is not "merge" or "skip", the prediction direction is not known until the prediction direction performs the motion vector prediction process. In other words, there is a case where it is not known how many motion vector differences are included in the bitstream only by extracting data from the bitstream. This is a problem of data dependence.

To prevent this, if the prediction direction ("inter_pred_idc") is not decoded in the group, then the prediction direction ("inter_pred_idc") is decoded from the bitstream. For example, suppose that the prediction direction ("inter_pred_idc") is always decoded from the bitstream. This makes it possible to determine which data to decode next, simply by extracting the data from the bitstream, without performing the motion vector prediction process.

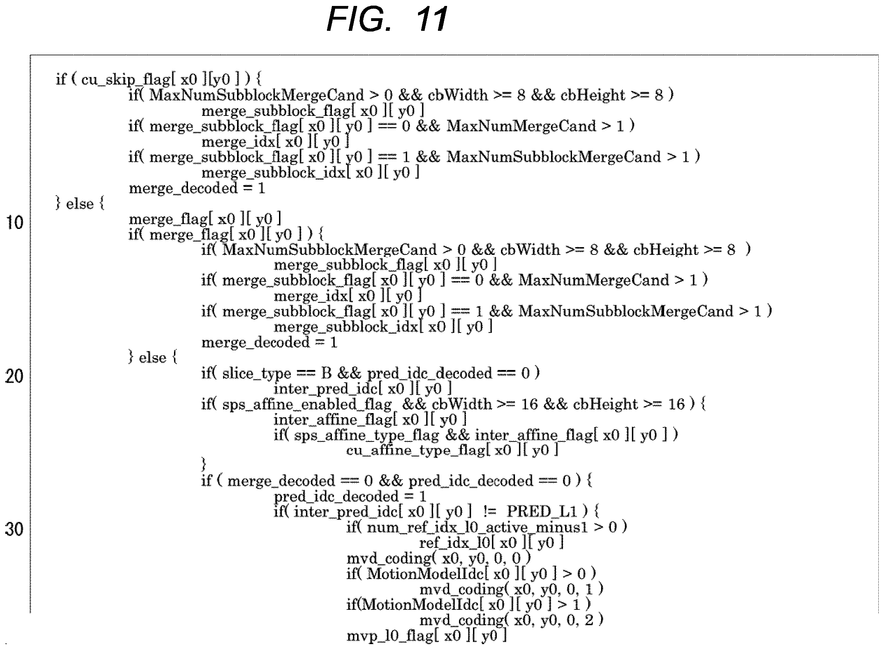

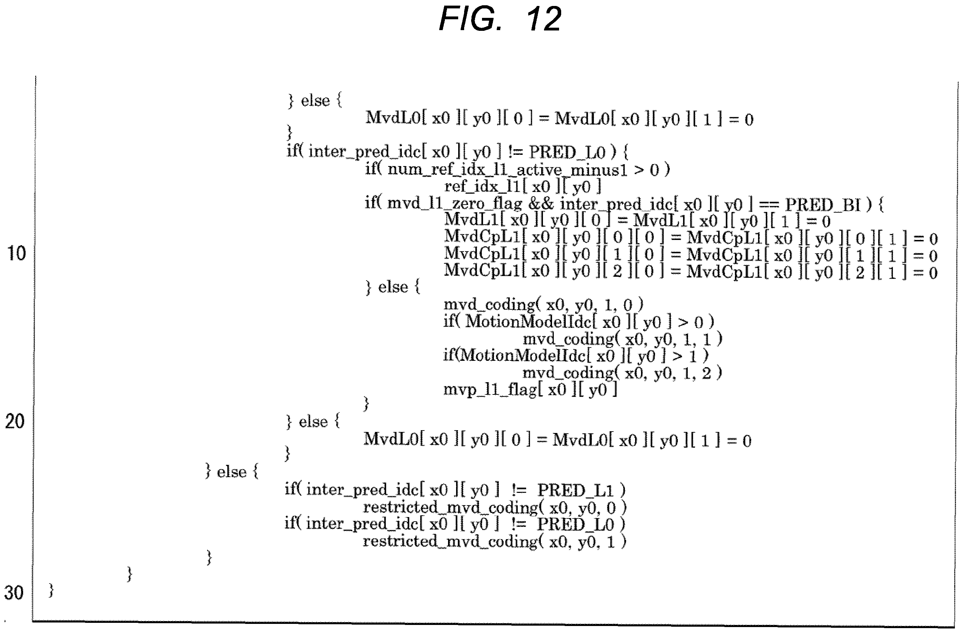

(Embodiment 3) FIGs. 11 and 12 are syntax diagrams illustrating third embodiment according to decoding methods. As shown in FIGs. 11 and 12, in the embodiment 2, the decoding method controlled only by "not_fitst_block" is controlled by two variables, "merge_decoded" and "pred_idc_decoded" as shown in lines 8, 20 and 27 of FIG. 11.

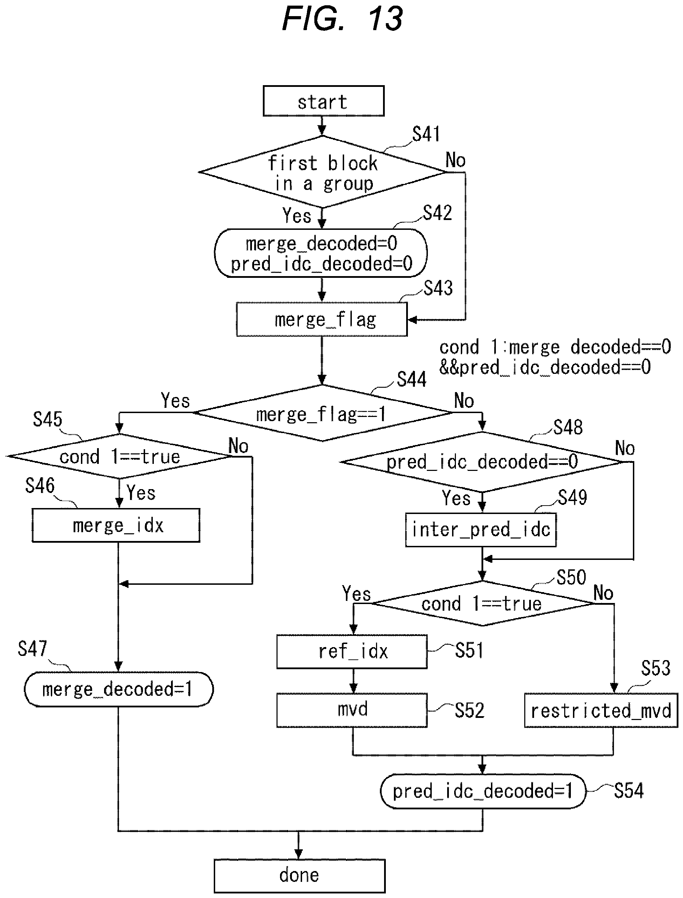

FIG. 13 is a flow chart illustrating a decoding process according to embodiment 3. As shown in step S41 of FIG. 13, it is determined whether the block is the first block of the group. In the case of the first block, "merge_decoded" and "pred_idc_decoded" are set to 0 as shown in step S42. Hereinafter, the case where "merge_decoded" is 0 and the case where "pred_idc_decoded" is 0 are indicated by "cond 1". Then, as shown in step S43, "merge_flag" is read in. On the other hand, if the block is not the first block in step S41, the process advances to step S43 to read "merge_flag".

Next, as shown in step S44, it is determined whether "merge_flag" is 1. When "merge_flag" is 1, it is determined whether "cond 1" is satisfied as shown in S45. If "cond 1" is satisfied in step S45, merging is performed as shown in step S46. If "cond 1" is not satisfied, "merge_decoded" is set to 1 as shown in S47.

On the other hand, when "merge_flag" is not 1 in step S44, it is determined that "pred_idc_decoded" is 0 as shown in step S48. When "pred_idc_decoded" is 0, "inter_pred_idc" is decoded as shown in step S49. As described above, the present embodiment includes the step of decoding the prediction direction. Then, the process proceeds to step S50. On the other hand, if "pred_idc_decoded" is not 0 in step S48, the process proceeds to step S50.

Next, as shown in S50, it is determined whether or not "cond 1" is satisfied. When "cond 1" is satisfied, the reference index and the difference between the reference index and the motion vector are decoded from the bitstream as shown in steps S51 and S52. If "cond 1" is not satisfied in step S50, a difference from the predicted values of the limited motion vectors is decoded from the bitstream as shown in step S53.

Then, as shown in step S54, "pred_idc_decoded" is set to 1. Repeat from "Start" to "done" for the blocks. In this way, the bitstream can be decoded.

In the present embodiment, when the prediction direction ("inter_pred_idc") is not decoded in the group, the prediction direction ("inter_pred_idc") is decoded from the bitstream. Thus, it is possible to determine which data to decode next by simply extracting the data from the bitstream. As a result, data dependency can be eliminated.

However, there is a possibility that the prediction direction obtained on the basis of the surrounding data in the "merge" blocks and the prediction direction decoded from the bitstream do not coincide with each other due to a factor such as mixing errors in the bitstream. When a discrepancy occurs, for example, the predicted directions of the blocks of "merge" are prioritized. In addition, the difference between the motion vectors that are not decoded is treated as 0, and the difference between the unnecessary vectors is discarded, so that the decoding process can be performed even when a discrepancy occurs. When a discrepancy occurs, the value of "inter_pred_idc" may be given priority.

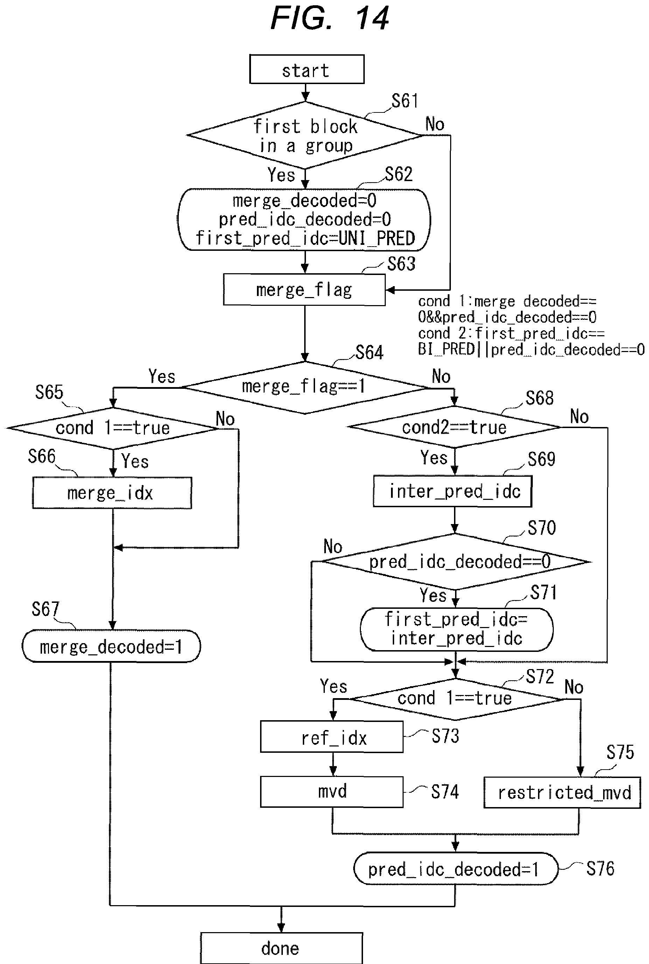

In addition, a method of improving image quality while maintaining a memory bandwidth will be described. FIG. 14 is a flow chart illustrating another decoding process according to embodiment 3.

As shown in FIG. 14, in addition to the method of FIG. 13, the present decoding method enables blocks in subsequent groups to select an arbitrary direction as a prediction direction when "inter_pred_idc" decoded first in the group is "BI_PRED". This considers that, when the first block is "BI_PRED", the required memory bandwidth does not change even if the subsequent prediction direction is not limited. That is, since "BI PRED" has the maximum number of planes to be referred to, there is no change in the maximum number of planes to be referred to regardless of the prediction direction of the subsequent blocks. "BI_PRED" indicates, for example, a case where two sheets are referred to.

To accomplish this, retain the first "inter_pred_idc" decoded in the group as well as whether "inter_pred_idc" has been deencoded. If it is "BI_PRED", decryption of "inter_pred_idc" is performed. Specifically, for example, when the prediction direction of the first block is both the forward and backward directions, decoding is performed using the prediction direction from the bitstream in the second and subsequent blocks.

As shown in step S61 of FIG. 14, it is determined whether the block is the first block of the group. In the case of the first block, as shown in step S62, "merge_deencoded" is set to 0, "pred_idc_decoded" is set to 0, and "first_pred_idc" is set to "UNI_PRED".

Hereinafter, the case where "merge_decoded" is 0, the case where "pred_idc_decoded" is 0, and the case where "first_pred_idc" is "UNI_PRED" are indicated by "cond 1".

This property indicates "cond 2" when "first_pred_idc" is "BI_PRED" and "pred_idc_decoded" is 0. Next, as shown in step S63, "merge_flag" is read in. On the other hand, if it is not the first block, the process proceeds to step S63. Then, "merge_flag" is decoded.

Next, as shown in step S64, it is determined whether or not "merge_flag" is 1. When "merge_flag" is 1, it is determined whether "cond 1" is satisfied as shown in S65. If "cond 1" is satisfied in step S65, merging is performed as shown in step S66. Then, the process proceeds to step S67. On the other hand, when "cond 1" is not satisfied, the process proceeds to S67. In step S67, "merge_decoded" is set to 1.

On the other hand, if "merge_flag" is not 1 in step S64, it is determined whether "cond 2" is satisfied as shown in step S68. If "cond 2" is satisfied, "inter_pred_idc" is decoded as shown in S69. Then, as shown in step S70, it is determined that "pred_idc_decoded" is 0. When "pred_idc_decoded" is 0, "first_pred_idc" is set to "inter_pred idc" as shown in step S71. Then, the process proceeds to step S72. On the other hand, if "pred_idc_decoded" is not 0 in step S70, the process proceeds to step S72. On the other hand, if "cond 2" is not satisfied in step S68, the process proceeds to step S72.

Next, as shown in S72, it is determined whether or not "cond 1" is satisfied. If "cond 1" is satisfied, the reference index and the difference between the reference index and the motion vector are decoded from the bitstream as shown in steps S73 and S74. If "cond 1" is not satisfied in S72, the difference between the prediction value and the prediction value of the limited motion vector is decoded from the bitstream.

Then, as shown in step S76, "pred_idc_decoded" is set to 1. Repeat from "Start" to "done" for the blocks. In this way, the bitstream can be decoded.

According to the present embodiment, for example, the image quality can be improved while maintaining the memory bandwidth of the external memory. Other configurations and effects are included in the description of the embodiments 1 and 2.

Although each embodiment has been described above, the present invention is not limited to the above described configuration, and can be changed within a range not deviating from the technical idea. In addition, an encoding method, a decoding method, an encoding device, and a decoding device in which the respective configurations of the embodiments 1 to 3 are combined are also within the scope of technical ideas.

In addition, the following decoding program and encoding program, which cause a computer to execute the decoding method and encoding method, and the following encoding device also fall within the technical concept of the embodiments 1 to 3.
(Additional statement 1) In an encoding program causing a computer to execute encoding an image into a bitstream using the difference between a reference index indicating the frame to be referenced and a predicted value of a motion vector predicted in the frame, for each block obtained by dividing each frame of a moving image in which a plurality of frames are continuous, the program comprising the steps of: defining a plurality of groups having a predetermined number of the blocks in each of the frames, encoding the moving picture for each block by adding a limitation for each group to the reference index of the block other than the first block in the group and the range of the difference, determining whether a target block to be decoded is the first block of the group, decoding the target block using the reference index and the difference when the target block to be decoded is the first block, decoding the target block using the limited reference index and the difference if the target block is not the first block.
(Additional statement 2) The decoding program according to additional statement 1, wherein if the target block is not the first block, the decoding program causes the reference index to be the same reference index as the first block.
(Additional statement 3) The decoding program according to additional statement 1, wherein if the target block is not the first block, the prediction value is set to the same prediction value as the first block.
(Additional statement 4) The decoding program according to additional statement 1, wherein if the target block is not the first block, the prediction value is set as the motion vector of the first block.
(Additional statement 5) The decoding program according to additional statement 1, wherein the block is a block in which the number of pixels included in the block is equal to or less than a predetermined number, or a block in which the number of divisions in the frame is equal to or more than a predetermined number.
(Additional statement 6) The decoding program according to additional statement 1, wherein the decoding program performs a filtering process on the target block from an area having more pixels than the target block.
(Additional statement 7) The decoding program according to additional statement 1, wherein the moving image is encoded using a prediction direction indicating a direction of a frame used for prediction with respect to a temporal axis, and when the target block is the first block, the decoding program further uses the prediction direction to decode the moving image.
(Additional statement 8) The decoding program according to additional statement 7, wherein before determining whether the block to be decoded is the first block of the group, the target block determines whether the block to be decoded is a merge target for copying the prediction directions, the reference index, and the differences from the surrounding blocks, and when the block to be merged is a merge target, the merge is performed on the target block, and when the block is not a merge target, it is determined whether the block is the first block of the group.
(Additional statement 9) The decoding program according to additional statement 1, wherein the moving image is encoded using a prediction direction indicating a direction of a frame used for prediction with respect to a temporal axis, and the decoding program decodes the prediction direction.
(Additional statement 10) The decoding program according to additional statement 7, wherein when the prediction direction of the first block is both the forward and backward directions, the decoding program decodes the bitstream using the prediction direction when the bitstream is not the first block.
(Additional statement 11) An encoding program for encoding the moving image into a bitstream using a reference index indicating a frame to be referred to and a difference from a prediction value of a motion vector predicted in the frame for each block obtained by dividing each frame of a plurality of frames into consecutive moving images, wherein the encoding program causes a computer to determine whether a group having a predetermined number of the blocks is a first block of the group, if the block to be encoded is the first block, the encoding program uses the reference index and the difference, and if the block to be encoded is not the first block, the encoding program causes a computer to encode the range of the reference index and the difference by imposing a limitation on the range of the reference index and the difference for each group.
(Additional statement 12) The encoding program according to additional statement 11, wherein if the target block is not the first block, the encoding program causes the reference index to be the same reference index as the first block.
(Additional statement 13) The encoding program according to additional statement 11, wherein if the target block is not the first block, the encoding program causes the prediction value to be the same as the prediction value of the first block.
(Additional statement 14) The encoding program according to additional statement 11, wherein if the target block is not the first block, the encoding program causes the prediction value to be the motion vector of the first block.
(Additional statement 15) An encoding device encoding an image into a bitstream using the difference between a reference index indicating the frame to be referenced and a predicted value of a motion vector predicted in the frame, for each block obtained by dividing each frame of a moving image in which a plurality of frames are continuous, comprising: a control unit defining a plurality of groups having a predetermined number of the blocks in each of the frames, and determining whether the block to be encoded is the first block of the group; an encoding unit encoding the moving image into the bitstream, wherein when the target block is the first block, the control unit causes the encoding unit to perform encoding using the reference index and the difference, and wherein If the target block is not the first block, the encoding unit encodes the reference index and the range of the difference by adding a limitation for each group.
(Additional statement 16) The encoding device according to additional statement 15, wherein if the target block is not the first block, the control unit causes the encoding unit to encode the target block using the same reference index as the reference index of the first block.
(Additional statement 17) The encoding device according to additional statement 15, wherein when the target block is not the first block, the control unit causes the encoding unit to encode the target block using the same prediction value as the first block as the prediction value.
(Additional statement 18) The encoding device according to additional statement 15, wherein when the target block is not the first block, the control unit causes the encoding unit to encode the target block using the motion vector of the first block as the prediction values.

## Claims

1. In a decoding method decoding a bitstream encoded a moving image using the difference between a reference index indicating the frame to be referenced and a predicted value of a motion vector predicted in the frame, for each block obtained by dividing each frame of a moving image in which a plurality of frames are continuous, the decoding method defining a plurality of groups having a predetermined number of the blocks in each of the frames, encoding the moving picture for each block by adding a limitation for each group to the reference index of the block other than the first block in the group and the range of the difference, the decoding method comprising the steps of:
a first block determination step determining whether a target block to be decoded is the first block of the group,
a first block decode step decoding the target block using the reference index and the difference when the target block to be decoded is the first block, and
a second block decode step decoding the target block using the limited reference index and the difference if the target block is not the first block.

2. The decoding method of claim 1, wherein in the second and subsequent block decoding steps, the reference index is the same reference index as the first block.

3. The decoding method of claim 1 or 2, wherein in the second and subsequent block decoding steps, the predicted value is the same predicted value as the first block.

4. The decoding method of claim 1, wherein in the second and subsequent block decoding steps, the prediction value is the motion vector of the first block.

5. The decoding method according to one of claims 1 to 4, wherein the block is a block in which the number of pixels included in the block is equal to or less than a certain number, or a block in which the number of divisions in the frame is equal to or more than a certain number.

6. The decoding process as claimed in one of claims 1 to 5, wherein the target block is filtering processed from an area having more pixels than the target block.

7. The decoding method according to one of claims 1 to 6, wherein the moving image is encoded using a prediction direction indicating a direction of a frame used for prediction with respect to a time axis, and the prediction direction is further used for decoding in the first block decoding step.

8. The decoding method according to claim 7, wherein before the first block determination step, the target block determines whether the target block is a merge target for copying the prediction direction, the reference index, and the difference from the surrounding blocks, and if the target block is a merge target, the merge is performed on the target block, and if the target block is not a merge target, the decoding method proceeds to the first block determination step.

9. The decoding method of one of claims 1 to 8, wherein the moving image is encoded using a prediction direction indicating a direction of a frame used for prediction with respect to a time axis, and further comprises a prediction direction decoding step of decoding the prediction direction.

10. The decoding method according to one of claims 7 to 9, wherein, in the first block decoding step, when the prediction direction is both the forward and backward directions, in the second and subsequent block decoding steps, decoding is performed using the prediction direction from the bitstream.

11. A decoding device for decoding a bitstream encoded a moving image is encoded by using a reference index indicating a frame to be referred to and a difference from a predicted value of a motion vector predicted in the frame for each block obtained by dividing each frame of a moving image in which a plurality of frames are continuous, the decoding device defining a plurality of groups having a predetermined number of the blocks in each of the frames, encoding the moving picture for each block by adding a limitation for each group to the reference index of the block other than the first block in the group and the range of the difference, the decoding device comprising:
a determination unit determining whether a target block to be decoded is the first block of the group; and
a decode unit decoding the moving image from the bitstream,
wherein the determined unit decodes the target block using the reference index and the difference when the target block to be decoded is the first block, and
wherein the determined unit decodes the target block using the limited reference index and the difference if the target block is not the first block.

12. The decoding device as claimed in claim 11, further comprising the features as additionally defined in one or more of claims 2, 3, 4, or 5.

13. The decoding device as claimed in claim 11 or 12, further comprising a filtering circuit for performing a filtering process so that an area having a larger number of pixels than the target block becomes the block.

14. In a encoding method encoding a moving image into a bitstream using the difference between a reference index indicating the frame to be referenced and a predicted value of a motion vector predicted in the frame, for each block obtained by dividing each frame of a moving image in which a plurality of frames are continuous, the encoding method comprising the steps of:
a step defining a plurality of groups having a predetermined number of the blocks in each of the frames,
a step determining whether a target block to be decoded is the first block of the group,
a first block encoding step encoding the target block using the reference index and the difference when the target block to be decoded is the first block, and
a second block encoding step encoding the target block using the limited reference index and the difference if the target block is not the first block.

15. The encoding method of claim 14, further comprising the features as additionally defined in one or more of claims 2, 3, or 4.
